# FASCICULE DE BREVET EUROPEEN

(11) **EP 0 748 582 B1**
(45) Date de publication et mention de la délivrance du brevet: **04.10.2000**
(21) Numéro de dépôt: 96440047.7
(22) Date de dépôt: 07.06.1996
(51) Int. Cl.: A01D 34/00

(54) **Dispositif de liaison d'un outil de broyage à l'âme centrale d'un rotor. Machine agricole de broyage de végétaux équipée d'un tel dispositif**
Vorrichtung zur Verbindung eines Häckslerwerkzeugs mit einem Rotor; landwirtschaftliche Häckselmaschine versehen mit einer solchen Vorrichtung
Device for the connection of a crushing tool to a rotor; agricultural crushing machine equipped with such a device

(30) Priorité: 12.06.1995 FR 9507114
(43) Date de publication de la demande: 18.12.1996
(73) Titulaire: KUHN S.A., 67700 Saverne (FR)
(72) Inventeur: Gantzer, Jean-Paul, Dannelbourg, 57820 Lutzelbourg (FR)

(56) Documents cités:
- FR-A- 633 647
- FR-A- 2 287 157
- US-A- 3 331 417
- US-A- 3 373 548
- US-A- 3 993 143
- US-A- 4 060 961

## Description

La présente invention concerne un dispositif de liaison d'un outil de broyage à l'âme centrale d'un rotor d'une machine agricole de broyage de végétaux tournant autour d'un axe de rotation au moins sensiblement horizontal et transversal à la direction d'avance au travail, ledit dispositif de liaison comporte un moyen permettant audit outil de broyage d'occuper plusieurs positions de travail de sorte à décrire, lors de la rotation du rotor, des trajectoires de rayons différents correspondant à des niveaux de travail différents.

Il est connu dans l'état de la technique un document US-A-3993143 qui divulgue une machine de travail du sol destinée à reconditionner et à aérer le sol. Cette machine comporte un rotor composé d'une âme centrale à laquelle sont liés des outils. Chaque outil est lié à l'âme centrale au moyen de boulons et d'encoches prévues dans ledit outil de manière à permettre à ce dernier d'occuper plusieurs positions de travail. Ces encoches dans l'outil permettent de changer la profondeur de travail desdits outils et de pénétrer plus profondément dans le sol.

Cependant, pour changer la profondeur de travail il faut défaire les différents boulons ce qui s'avère être une opération longue et pénible.

Il est également connu dans l'état de la technique un document divulguant un broyeur agricole "FALC". Chaque dispositif de liaison lie des couteaux à une âme centrale d'un rotor d'un broyeur agricole, et est composé d'une pièce en forme de "U" appelée communément manille. Chaque manille est liée à l'une de ses extrémités à l'âme centrale du rotor, au moyen d'un boulon qui traverse de part en part deux ailes solidaires de l'âme centrale formant une chape, et l'extrémité supérieure de la manille. A cet effet, il est prévu à l'extrémité supérieure de la manille deux trous situés chacun à l'extrémité du "U" formant ladite manille. Les couteaux, quant à eux, sont engagés dans la manille correspondante avant montage de celle-ci sur l'âme centrale du rotor au moyen de trous prévus à cet effet sur les couteaux. Chaque manille est montée pivotante sur le boulon fixé sur l'âme centrale du rotor et les couteaux sont également montés de manière pivotante sur la manille correspondante. Lors du travail, le rotor est animé en rotation autour d'un axe de rotation horizontal et les couteaux ainsi que les manilles s'étendent radialement à l'âme centrale dudit rotor.

On notera que les couteaux de ce broyeur agricole sont tous d'une même longueur et balayent, lors du travail, des trajectoires de rayons sensiblement égaux. A cet effet, les couteaux de ce broyeur agricole travaillent tous à un même niveau, ce qui limite l'utilisation d'un tel broyeur à l'entretien de surfaces planes, comme des parcelles de jachère, des parcelles de résidus de végétaux, etc...

Il est encore connu dans l'état de la technique un document divulguant une effaneuse "EUREKA" destinée à ôter et broyer les fanes des tubercules des pommes de terre ou autres produits agricoles analogues cultivés en billons.

Une telle effaneuse comporte un rotor destiné à tourner autour d'un axe de rotation horizontal. Ce rotor est doté d'une âme centrale sur laquelle sont agencés des outils de travail destinés, lors du travail, à épouser les dénivellations du sol, de manière à effaner et à broyer la verdure des plantes qui s'étend sur la surface cultivée. A cet effet, l'âme centrale du rotor est équipée d'outils de travail de différentes longueurs : des outils relativement courts destinés à broyer la verdure située sur les sommets des billons, des outils de longueur moyenne destinés à broyer la verdure située sur les flancs des billons, et des outils relativement longs destinés à broyer la verdure située aux pieds des billons. Chacun de ces outils de broyage et d'effanage est lié à l'âme centrale du rotor au moyen d'une liaison cylindrique composée, dans les grandes lignes, d'une chape solidaire de l'âme centrale et d'un boulon de liaison.

On remarquera que cette machine agricole est exclusivement destinée à effaner et à broyer les végétaux superficiels des cultures en billons et ne permet pas un travail efficace et satisfaisant sur une parcelle plane.

La présente invention a pour but de concevoir une machine agricole polyvalente permettant à la fois de broyer verdure et résidus de plantes s'étendant sur une parcelle sensiblement plane, et d'effaner et de broyer la verdure et le feuillage des plantes cultivées en billons quel que soit l'écartement desdits billons, la machine agricole devra être de conception simple et peu chère, et l'utilisation de ladite machine agricole sur une parcelle sensiblement plane ou sur une parcelle comportant des billons ne devra susciter qu'un minimum de réglage.

A cet effet, le dispositif de liaison comporte un moyen permettant à l'outil de broyage d'occuper plusieurs positions de travail de sorte à décrire, lors de la rotation du rotor, des trajectoires de rayons différents correspondant à des niveaux de travail différents. Ainsi, lorsqu'on souhaite travailler sur une parcelle sensiblement plane tous les outils de broyage pourront occuper une même position de travail de sorte à décrire, lors de la rotation du rotor, des trajectoires de rayons identiques de manière à obtenir une surface broyée au moins sensiblement plane. Lorsqu'on souhaite au contraire effaner et broyer la verdure et le feuillage de plantes cultivées en billons, on règle la position de travail de certains des outils de broyage en fonction de l'implantation des billons de manière que, lors de la rotation du rotor, les trajectoires décrites par l'ensemble des outils de broyage épousent au moins sensiblement les dénivellations du sol.

Selon une caractéristique supplémentaire de l'invention, le moyen permettant à l'outil de broyage d'occuper plusieurs positions de travail comporte un support intermédiaire auquel est lié l'outil de broyage, ledit support intermédiaire étant lui même destiné à être lié à l'âme centrale du rotor à l'aide d'une première articulation d'axe au moins sensiblement parallèle à l'axe de rotation du rotor.

Avantageusement, le support intermédiaire est lié à l'outil de broyage à l'aide d'une deuxième articulation d'axe au moins sensiblement parallèle à l'axe de la première articulation.

Selon une autre caractéristique supplémentaire de l'invention, le moyen permettant à l'outil de broyage d'occuper plusieurs positions de travail comporte un moyen de blocage destiné à condamner la première articulation de manière à fixer le support intermédiaire sur l'âme centrale du rotor dans au moins une position angulaire écartée de la position radiale. Une telle conception permet, en positionnant le support intermédiaire dans une position angulaire écartée de la position radiale, à l'outil de broyage de décrire, lors de la rotation du rotor, des trajectoires de rayons plus petits correspondant à des niveaux de travail plus haut.

Avantageusement, ladite (lesdites) position(s) angulaire(s) du support intermédiaire s'étend(ent), compte tenu du sens de rotation du rotor, derrière la position radiale, afin de permettre un dégagement optimal de l'outil de broyage lorsque celui-ci vient à heurter un éventuel obstacle de masse relativement importante. En sus, lorsque le support intermédiaire s'étend dans une position angulaire, il est, en partie au moins, situé derrière une partie de l'âme centrale le mettant ainsi à l'abri de certains obstacles.

Selon une autre caractéristique supplémentaire de l'invention, le moyen de blocage comporte une vis de blocage destinée d'une part à traverser l'âme centrale du rotor ou un organe fixe par rapport à ladite âme centrale, et d'autre part à être vissée dans au moins un trou fileté du support intermédiaire, ou vice versa.

Avantageusement, le support intermédiaire est destiné à être monté dans une chape correspondante de l'âme centrale du rotor, et l'organe fixe, par rapport à ladite âme centrale, est formé par une pièce d'appui destinée à prendre appui sur les deux ailes de la chape, la vis étant destinée à traverser cette pièce d'appui et à être vissée dans un trou fileté prévu dans le support intermédiaire.

Préférentiellement, la pièce d'appui et les ailes présentent des surfaces complémentaires destinées à centrer la pièce d'appui entre lesdites ailes de manière à permettre un montage correcte de la vis dans le trou fileté correspondant.

Selon une autre caractéristique supplémentaire de l'invention, le support intermédiaire présente une chape dans laquelle est monté l'outil de broyage.

L'invention concerne également une machine agricole de broyage de végétaux comportant un rotor tournant autour d'un axe de rotation au moins sensiblement horizontal et transversal à la direction d'avance au travail, lequel rotor comportant une âme centrale et des outils de broyage liés chacun à ladite âme centrale au moyen d'un dispositif de liaison, certains au moins desdits dispositifs de liaison sont des dispositifs de liaison selon l'invention. Ainsi, lorsque tous les outils de broyage sont liés à l'âme centrale du rotor au moyen des dispositifs de liaison selon l'invention, la machine agricole de broyage de végétaux pourra être adaptée en fonction de l'écartement des billons de manière à effaner et broyer la verdure et le feuillage des plantes cultivées en billons, quel que soit l'écartement de ces derniers.

D'autres objets et caractéristiques de l'invention ressortiront de la description ci-après, avec référence aux dessins annexés qui représentent, à titre d'exemples non limitatifs, quelques formes de réalisation du dispositif selon l'invention.

Sur ces dessins :
- la figure 1 représente, selon une première forme d'agencement, une vue de face, sur laquelle a été effectuée une coupe partielle d'une machine agricole de broyage équipée du dispositif de liaison selon la présente invention ;
- la figure 2 représente une deuxième forme d'agencement de la machine agricole de broyage représentée sur la figure 1 ;
- la figure 3 représente, suivant la flèche III définie sur la figure 1 à une échelle agrandie, une vue latérale sur laquelle ont été effectuées différentes coupes partielles d'un outil de broyage en position radiale lié à l'âme centrale du rotor ;
- la figure 4 représente, à une échelle agrandie, une coupe par le plan IV-IV définie sur la figure 1 ;
- la figure 5 représente, à une échelle agrandie, une coupe par le plan V-V définie sur la figure 1 ;
- la figure 6 représente, à une échelle agrandie, une coupe par le plan VI-VI définie sur la figure 4 ;
- la figure 7 représente selon une deuxième forme de réalisation, une vue latérale d'un outil de broyage lié à l'âme centrale du rotor sur laquelle ont été effectuées différentes coupes partielles.

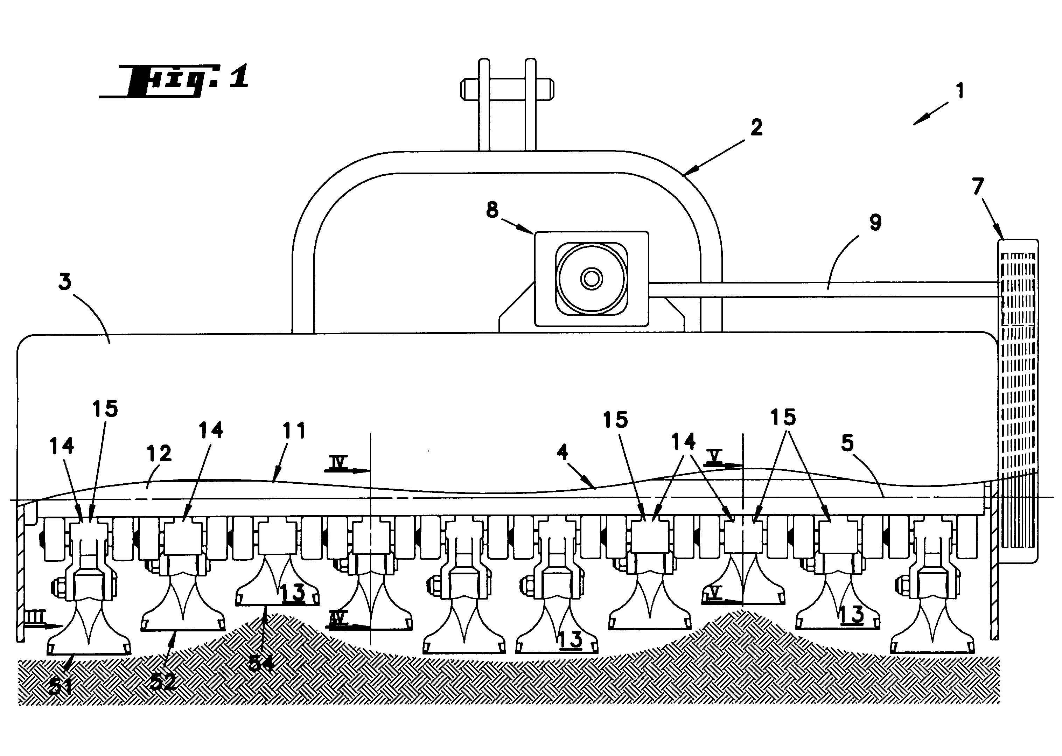

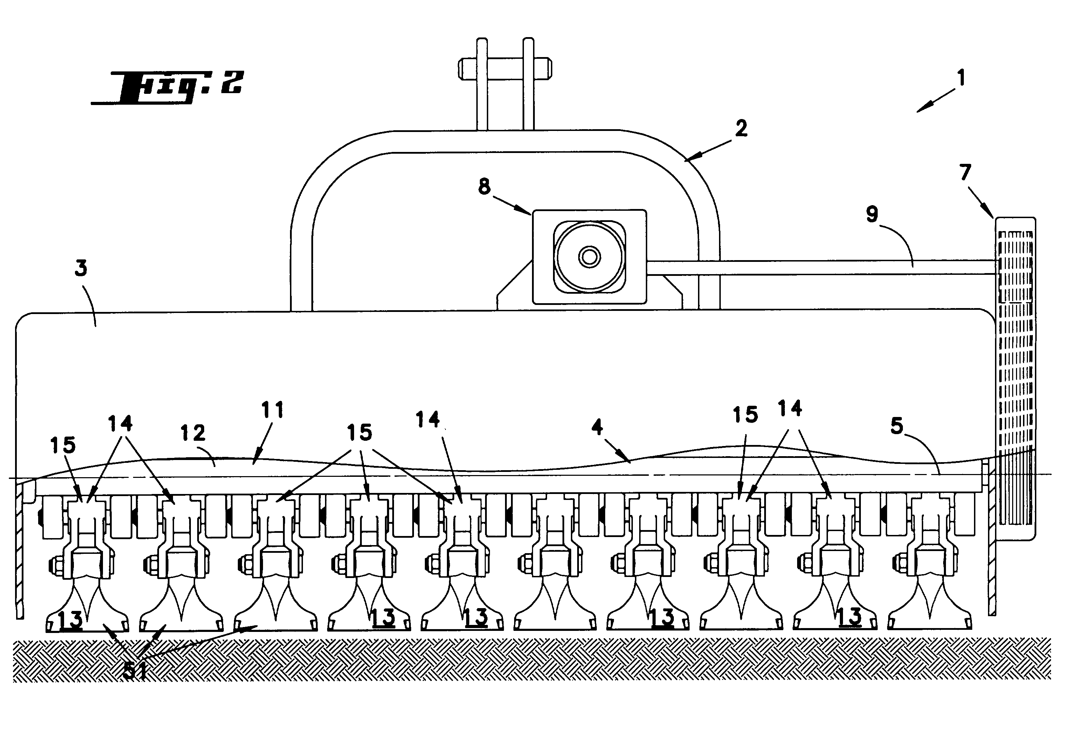

Sur les figures 1 et 2 est représentée une machine agricole (1) de broyage destinée à être liée à un véhicule moteur (non représentée) au moyen d'un dispositif d'attelage (2). La machine agricole (1) de broyage comporte, selon l'exemple représenté, un capot (3) abritant un rotor (4) lequel est destiné à tourner autour d'un axe de rotation (5) au moins sensiblement horizontal et transversal à la direction d'avance (6) au travail. Le rotor (4) est entraîné en rotation par une transmission secondaire (7) laquelle reçoit le mouvement d'une transmission primaire (8) au moyen d'un arbre de transmission (9). La transmission primaire (8) est entraînée par le véhicule moteur au moyen d'un arbre de transmission à joints universels (non représenté).

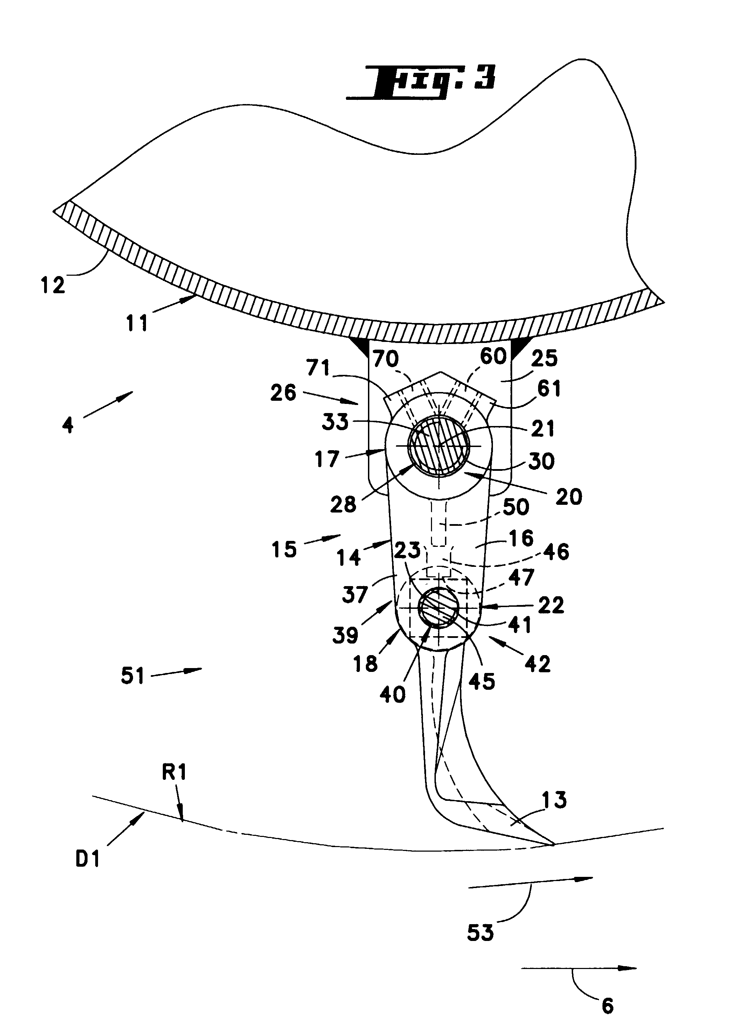

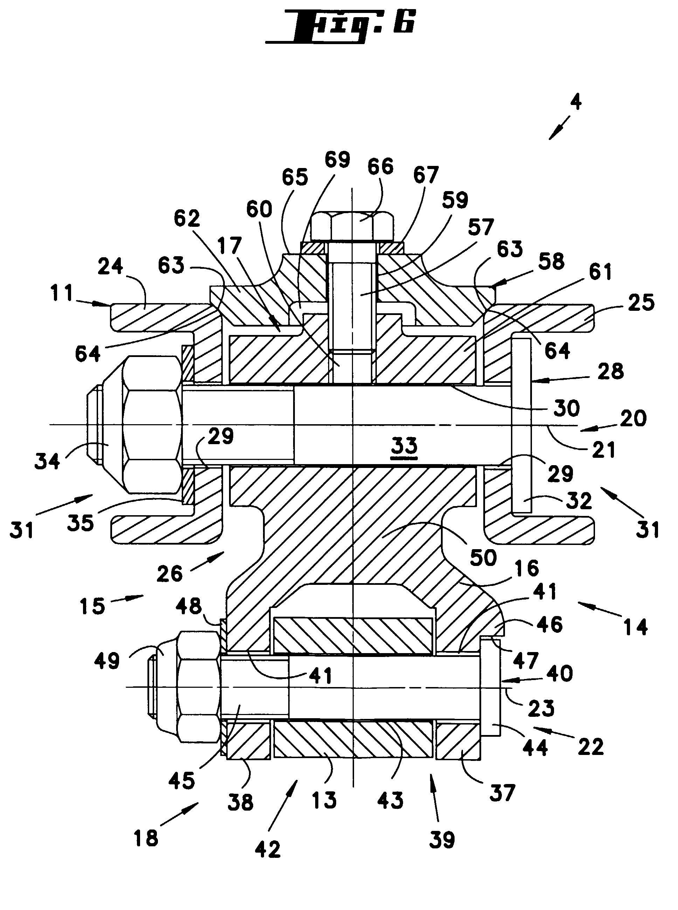

Le rotor (4) comporte une âme centrale (11) qui est, selon cet exemple de réalisation représenté, un tube (12) de forme cylindrique. Sur ce tube (12) sont agencés des outils de broyage (13) qui sont, selon l'exemple représenté, des outils de broyage (13) appelés couramment des couteaux-marteaux. Chaque outil de broyage (13) est lié au tube (12) de l'âme centrale (11) au moyen d'un dispositif de liaison (14). Ce dispositif de liaison (14) comporte un moyen (15) permettant audit outil de broyage (13) d'occuper plusieurs positions de travail de sorte à décrire, lors de la rotation du rotor (4), des trajectoires de rayons différents correspondant à des niveaux de travail différents. Ce moyen (15) comporte, tel que représenté sur les figures 3 à 6, un support intermédiaire (16) lié, aux alentours de l'une (17) de ces extrémités (17, 18), à l'âme centrale (11) du rotor (4) au moyen d'une première articulation (20) du type cylindrique d'axe (21) au moins sensiblement parallèle à l'axe de rotation (5) du rotor (4).

A l'autre extrémité (18) du support intermédiaire (16), la plus éloignée de l'âme centrale (11) du rotor (4), est lié un outil de broyage (13) à l'aide d'une deuxième articulation (22) également du type cylindrique d'axe (23) au moins sensiblement parallèle à l'axe (21) de la première articulation (20).

Selon l'exemple représenté, la première articulation (20) comporte deux ailes (24, 25) fixées radialement au tube (12) de l'âme centrale (11). Ces ailes (24, 25) forme une chape (26) dans laquelle est montée l'extrémité (17) du support intermédiaire (16) au moyen d'un premier boulon (28) traversant d'une part les deux ailes (24, 25) au moyen de trous (29) respectifs, et d'autre part l'extrémité (17) dudit support intermédiaire (16) au moyen d'un orifice (30) prévu à cet effet.

Chaque aile (24, 25) comporte un évidement (31), dans l'évidement (31) de l'aile (25) est logée la tête (32) de la vis (33) du premier boulon (28) et dans l'autre évidement (31) de l'aile (24) est logé l'écrou (34) dudit boulon (28) et une rondelle de blocage (35). Une telle conception permet, lors du travail de la machine agricole (1) de broyage, de protéger la tête (32) et l'écrou (34) du premier boulon (28) des projections de la matière broyée, ce qui permet avantageusement de conserver les formes et les dimensions initiales du premier boulon (28) afin de faciliter un éventuel démontage de ce dernier pour remplacer le support intermédiaire (16) par exemple.

La tête (32) de la vis (33) est de forme carrée, et est arrêtée en rotation au moyen de l'aile (25) qui présente à cet effet une forme adéquate.

La deuxième articulation (22) quant à elle comporte également deux ailes (37, 38) formant une chape (39) faisant partie du support intermédiaire (16). Dans cette chape (39) est monté l'outil de broyage (13) au moyen d'un deuxième boulon (40) traversant d'une part les deux ailes (37, 38) au moyen de trous (41) respectifs, et d'autre part l'extrémité supérieure (42) de l'outil de broyage (13) au moyen d'un orifice (43) prévu à cet effet.

Selon l'exemple de réalisation représenté, la tête (44) de la vis (45) appartenant au deuxième boulon (40) est de forme carrée, et est arrêtée en rotation au moyen d'un arrêt (46) prévu sur la partie extérieure de l'aile (37). Cet arrêt (46) comporte une surface (47) sensiblement plane sur laquelle est destinée à venir buter une partie au moins de la tête (44) de la vis (45) lorsque celle-ci à tendance à tourner.

Sur la partie extérieure de l'aile (38) vient prendre appui une rondelle de blocage (48) et l'écrou (49) du deuxième boulon (40).

On notera que le support intermédiaire (16) comporte des moyens de renforcement destinés à le rigidifier. A cet effet, le support intermédiaire (16) est doté d'une nervure (50) située d'une part, au moins sensiblement dans le plan de coupe VI-VI, transversalement entre les deux ailes (37, 38) de la chape (39), et s'étendant d'autre part de la première articulation (20) en direction de la deuxième articulation (22).

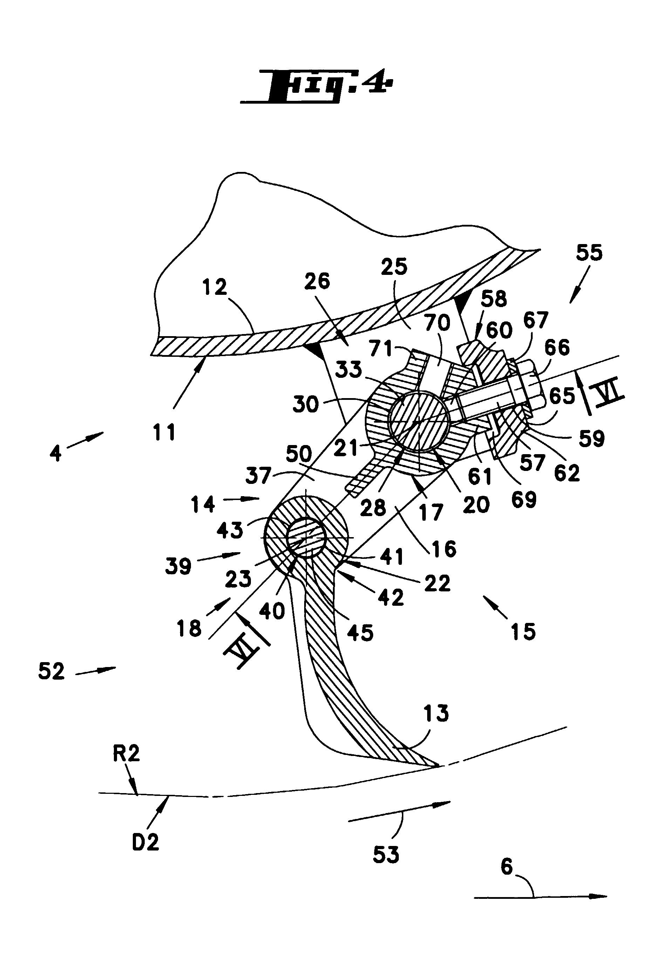

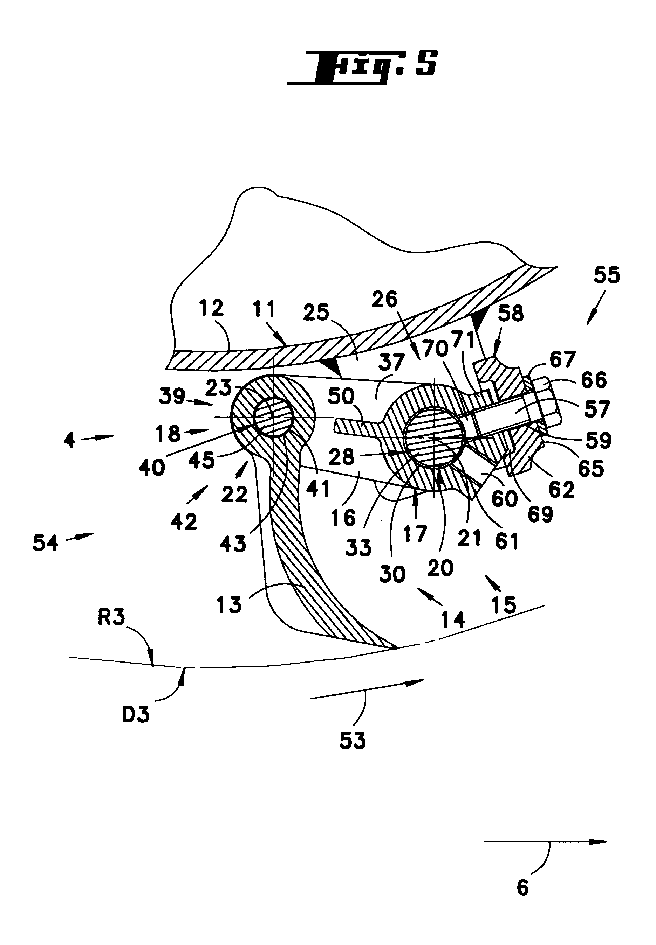

Sur les différentes figures 3 à 6, on voit en sus que le support intermédiaire (16) peut occuper, selon cet exemple de réalisation représenté, trois positions de travail:
- une position radiale (51) (figure 3) dans laquelle le support intermédiaire (16) et l'outil de broyage (13) s'étendent lors du travail, au moins sensiblement radialement au rotor (4) ;
- une première position angulaire (52) (figure 4) dans laquelle le support intermédiaire (16) s'étend, compte tenu du sens de rotation (53) du rotor (4), derrière la position radiale (51) et ;
- une deuxième position angulaire (54) (figure 5) dans laquelle le support intermédiaire (16) s'étend, compte tenu du sens de rotation (53) du rotor (4), derrière la première position angulaire (52).

On comprendra que chaque position (51, 52, 54) du support intermédiaire (16) correspond à un niveau de travail de l'outil de broyage (13). En effet, on voit sur les figures 3, 4 et 5 que l'outil de broyage (13) décrit, lors de la rotation du rotor (4), des trajectoires de rayons (R1, R2, R3) différents correspondant respectivement à la position radiale (51), à la première position angulaire (52) et à la deuxième position angulaire (54).

Dans la position radiale (51) l'outil de broyage (13) balaye, lors de la rotation du rotor (4), une surface circulaire de diamètre (D1). Dans cette position radiale (51), la première et la deuxième articulation (20, 22) autorisent respectivement un pivotement du support intermédiaire (16) par rapport au rotor (4) et de l'outil de broyage (13) par rapport audit support intermédiaire (16). Une telle conception permet au support intermédiaire (16) et à l'outil de broyage (13) de s'étendre, lors de la rotation du rotor (4), au moins sensiblement radialement audit rotor (4), ce qui donne le moyen à l'outil de broyage (13) de balayer une surface circulaire de diamètre (D1) relativement grande, de manière à broyer les végétaux et les résidus de végétaux situés relativement éloignés de l'âme centrale (11) du rotor (4).

En outre, l'outil de broyage (13) bénéficie d'un grand dégagement car il peut s'escamoter autour de la première articulation (20) et autour de la deuxième articulation (22) lorsqu'il vient à heurter un éventuel obstacle.

Dans la première position angulaire (52) l'outil de broyage (13) balaye, lors de la rotation du rotor (4), une surface circulaire de diamètre (D2). Dans cette première position angulaire (52), la deuxième articulation (22) autorise un pivotement de l'outil de broyage (13) par rapport au support intermédiaire (16), tandis que la première articulation (20) est condamnée à l'aide d'un moyen de blocage (55) fixant ledit support intermédiaire (16) sur l'âme centrale (11) du rotor (4). Selon l'exemple de réalisation représenté, le moyen de blocage (55) comporte une vis de blocage (57) traversant d'une part un organe (58), fixe par rapport à ladite âme centrale (11), au moyen d'un trou (59) prévu à cet effet, et vissée d'autre part dans un premier trou fileté (60) prévu dans le support intermédiaire (16). On remarquera que ce premier trou fileté (60) est réalisé dans un premier renflement (61) situé à l'extrémité (17) du support intermédiaire (16).

L'organe (58) est formé par une pièce d'appui (62) comportant, à chaque extrémité de deux côtés opposés, un chanfrein (63) au moyen desquels elle vient se centrer et prendre appui sur des surfaces complémentaires (64) prévues sur les ailes (24, 25) de la chape (26). La pièce d'appui (62) comporte en sus une surface plane (65) sur laquelle vient en appui la tête (66) de la vis de blocage (57) par l'intermédiaire d'une rondelle de blocage (67).

Du côté opposé de la surface plane (65) de la pièce d'appui (62) est prévu une échancrure (69) dans le volume de laquelle est destiné à venir se loger, au moins partiellement, le premier renflement (61) du support intermédiaire (16), de manière à assurer le contact des chanfreins (63) de la pièce d'appui (62) sur les surfaces complémentaires (64) des ailes (24, 25), afin d'obtenir un fixage correcte du support intermédiaire (16) sur l'âme centrale (11) du rotor (4).

Dans la deuxième position angulaire (54) l'outil de broyage (13) balaye, lors de la rotation du rotor (4), une surface circulaire de diamètre (D3). Dans cette position angulaire (54) la deuxième articulation (22) autorise un pivotement de l'outil de broyage (13), par rapport au support intermédiaire (16), tandis que la première articulation (20) est condamnée à l'aide du moyen de blocage (55), tel que décrit précédemment. On notera toutefois que dans cette deuxième position angulaire (54), la vis de blocage (57) est vissée dans un deuxième trou fileté (70) implanté sur le support intermédiaire (16), ledit trou fileté (70) correspondant à la deuxième position angulaire (54).

Ce deuxième trou fileté (70) est réalisé dans un deuxième renflement (71) semblable et adjacent au premier renflement (61). Ce deuxième renflement (71) est situé, tel que représenté sur les figures 4 et 5, entre le tube (12) et le premier renflement (61).

On remarquera encore que le support intermédiaire (16), selon cette première forme de réalisation, est symétrique par rapport au plan passant par la première et la deuxième articulation (20, 22).

On notera en outre que dans la position radiale (51), la première position angulaire (52) et la deuxième position angulaire (54), l'outil de broyage s'étend, lors du travail, au moins sensiblement radialement au rotor (4).

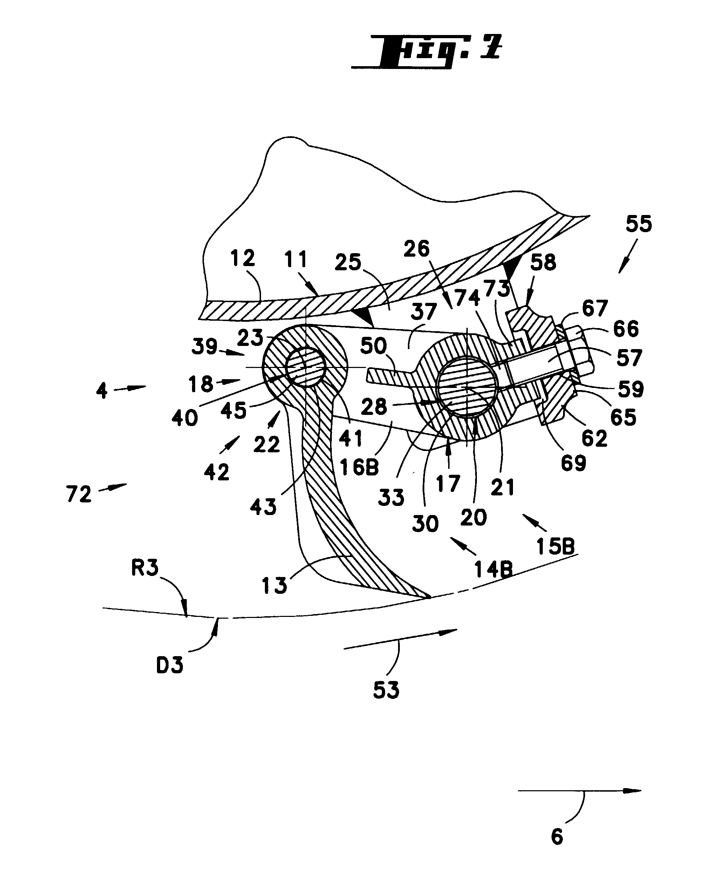

La figure 7 représente un deuxième exemple de réalisation du dispositif de liaison selon la présente idée inventive. Ce dispositif de liaison (14B) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif de liaison (14). Ces éléments seront affectés du même numéro de repère que ces éléments comparables du dispositif de liaison (14) suivi de la lettre B. Ils ne seront décrits que si cela s'avère nécessaire.

Le dispositif de liaison (14B) est, dans l'ensemble, semblable au dispositif de liaison (14). La différence réside dans le fait qu'il n'est prévu qu'une seule position angulaire (72) du support intermédiaire (16B). A cet effet, le support intermédiaire (16B) comporte un renflement (73) unique dans lequel est prévu un trou fileté (74).

Finalement, différentes modifications restent possibles, notamment en ce qui concerne la constitution des divers éléments ou par substitution d'équivalents techniques, sans pour autant sortir du domaine de protection défini dans les revendications.

Ainsi, il est parfaitement possible de concevoir un moyen de blocage comportant une vis de blocage traversant le support intermédiaire au moyen d'un trou prévu à cet effet et venant se visser dans un trou fileté de l'âme centrale du rotor.

Il est également parfaitement imaginable un moyen de blocage comportant une goupille de blocage traversant d'une part les deux ailes de la première articulation au moyen de deux trous situés au moins sensiblement l'un en face de l'autre, et d'autre part le support intermédiaire au moyen d'au moins un trou prévu sur celui-ci lequel est placé au moins sensiblement en face des deux trous des ailes cités ci-dessus.

Il est encore concevable de loger la tête (44) de la vis (45) et l'écrou (49) du deuxième boulon (40) dans des évidements respectifs prévus sur les ailes (37, 38) de la chape (39) du support intermédiaire (16).

On peut encore parfaitement concevoir d'agencer le dispositif de liaison (14 ; 14B) liant les outils de broyage (13) au tube (12) de l'âme centrale (11) d'une manière différente que celle représentée sur les figures 1 et 2. Ainsi, on peut parfaitement agencer les outils de broyage (13) de manière qu'ils soient, selon une vue latérale du rotor (4), décalés angulairement les uns par rapport aux autres autour de l'axe de rotation (5) du rotor (4).

Enfin, il est parfaitement possible que le dispositif de liaison (14 ; 14B) lie d'autres types d'outils à l'âme centrale (11) du rotor (4), comme par exemple des outils de fauche, de hachage, etc...

## Revendications

1. Dispositif de liaison d'un outil de broyage (13) à l'âme centrale (11) d'un rotor (4) d'une machine agricole (1) de broyage de végétaux tournant autour d'un axe de rotation (5) au moins sensiblement horizontal et transversal à la direction d'avance (6) au travail, ledit dispositif de liaison comporte un moyen (15 ; 15B) permettant audit outil de broyage (13) d'occuper plusieurs positions de travail de sorte à décrire, lors de la rotation du rotor (4), des trajectoires de rayons différents correspondant à des niveaux de travail différents, ***caractérisé en ce*** que ledit moyen (15 ; 15B) comporte:
- un support intermédiaire (16 ; 16B) auquel est lié l'outil de broyage (13) et lui-même destiné à être lié à l'âme centrale (11) du rotor (4) à l'aide d'une première articulation (20) d'axe (21) au moins sensiblement parallèle à l'axe de rotation (5) du rotor (4) ;
- un moyen de blocage (55) destiné à condamner la première articulation (20) de manière à fixer le support intermédiaire (16 ; 16B) sur l'âme centrale (11) du rotor (4) dans au moins une position angulaire (52, 54) écartée d'une position radiale (51).

2. Dispositif de liaison selon la revendication **1, *caractérisé en ce*** que le support intermédiaire (16 ; 16B) est lié à l'outil de broyage (13) à l'aide d'une deuxième articulation (22) d'axe (23) au moins sensiblement parallèle à l'axe (21) de la première articulation (20).

3. Dispositif de liaison selon la revendication 1 ou 2, ***caractérisé en ce*** que ladite (lesdites) position(s) angulaire(s) (52, 54) s'étend(ent), compte tenu du sens de rotation (53) du rotor (4), derrière la position radiale (51).

4. Dispositif de liaison selon l'une quelconque des revendications 1 à 3, ***caractérisé en ce*** que le moyen de blocage (55) comporte une vis de blocage (57) destinée d'une part à traverser l'âme centrale (11) du rotor (4) ou un organe (58) fixe par rapport à ladite âme centrale (11) et d'autre part à être vissée dans au moins un trou fileté (60, 70 ; 74) du support intermédiaire (16 ; 16B), ou vice versa.

5. Dispositif de liaison selon la revendication 4, ***caractérisé en ce*** que le support intermédiaire (16 ; 16B) est destiné à être monté dans une chape (26) correspondante de l'âme centrale (11) du rotor (4), et que ledit organe (58) est formé par une pièce d'appui (62) destinée à prendre appui sur les deux ailes (24, 25) de la chape (26), la vis de blocage (57) étant destinée à traverser cette pièce d'appui (62) et à être vissée dans un trou fileté (60, 70 ; 74) prévu dans le support intermédiaire (16 ; 16B).

6. Dispositif de liaison selon la revendication 5, ***caractérisé en ce*** que ladite pièce d'appui (62) et lesdites ailes (24, 25) présentent des surfaces complémentaires (63, 64) destinées à centrer la pièce d'appui (62) entre les ailes (24, 25).

7. Dispositif de liaison selon l'une quelconque des revendications 1 à 6, ***caractérisé en ce*** que le support intermédiaire (16, 16B) présente une chape (39) dans laquelle est monté l'outil de broyage (13).

8. Machine agricole de broyage de végétaux comportant un rotor (4) tournant autour d'un axe de rotation (5) au moins sensiblement horizontal et transversal à la direction d'avance (6) au travail, lequel rotor (4) comportant une âme centrale (11) et des outils de broyage (13) liés chacun à ladite âme centrale (11) au moyen d'un dispositif de liaison, ***caractérisée en ce*** que certains au moins desdits dispositifs de liaison sont des dispositifs de liaison selon l'une quelconque des revendications 1 à 7.

## Patentansprüche

1. Vorrichtung zur Verbindung eines Zerkleinerungswerkzeugs (13) mit einem mittleren Steg (11) eines Rotors (4) einer Landmaschine (1) zur Zerkleinerung von Pflanzengut, der sich um eine zumindest im wesentlichen horizontale und sich quer zur Fahrtrichtung (6) im Betrieb erstreckende Drehachse (5) dreht, wobei die Verbindungsvorrichtung ein Mittel (15; 15B) aufweist, das es dem Zerkleinerungswerkzeug (13) gestattet, mehrere Arbeitsstellungen einzunehmen, so daß es bei der Drehung des Rotors (4) verschiedenen Arbeitshöhen entsprechende Bahnen mit unterschiedlichen Radien beschreibt, ***dadurch gekennzeichnet,*** daß das Mittel (15; 15B)
- einen Zwischenträger (16; 16B), mit dem das Zerkleinerungswerkzeug (13) verbunden ist und der seinerseits mittels eines eine zur Drehachse (5) des Rotors (4) zumindest im wesentlichen parallel verlaufende Achse (21) aufweisenden ersten Gelenks (20) mit einem mittleren Steg (11) des Rotors (4) verbunden werden soll, und
- ein Sperrmittel (55), das das erste Gelenk (20) so sperren soll, daß der Zwischenträger (16; 16B) in mindestens einer von einer radialen Stellung (51) entfernten Winkelstellung (52, 54) an dem mittleren Steg (11) des Rotors (4) befestigt wird,
aufweist.

2. Verbindungsvorrichtung nach Anspruch 1, ***dadurch gekennzeichnet,*** daß der Zwischenträger (16; 16B) mittels eines eine zur Achse (21) des ersten Gelenks (20) zumindest im wesentlichen parallel verlaufende Achse (23) aufweisenden zweiten Gelenks (22) mit dem Zerkleinerungswerkzeug (13) verbunden ist.

3. Verbindungsvorrichtung nach Anspruch 1 oder 2, ***dadurch gekennzeichnet,*** daß die Winkelstellung(en) (52, 54) bezüglich der Drehrichtung (53) des Rotors (4) hinter der radialen Stellung (51) verläuft bzw. verlaufen.

4. Verbindungsvorrichtung nach irgend einem der Ansprüche 1 bis 3, ***dadurch gekennzeichnet,*** daß das Sperrmittel (55) eine Sicherungsschraube (57) enthält, die einerseits den mittleren Steg (11) des Rotors (4) oder ein bezüglich des mittleren Stegs (11) festgelegtes Element (58) durchqueren und andererseits in mindestens ein Gewindeloch (60, 70; 74) des Zwischenträgers (16; 16B) geschraubt werden soll, oder umgekehrt.

5. Verbindungsvorrichtung nach Anspruch 4, ***dadurch gekennzeichnet,*** daß der Zwischenträger (16; 16B) in einem dem mittleren Steg (11) des Rotors (4) entsprechenden Bügel (26) angebracht werden soll, und daß das Element (58) durch ein Stützteil (62) gebildet wird, das an den beiden Schenkeln (24, 25) des Bügels (26) zur Anlage kommen soll, wobei die Sicherungsschraube (57) dieses Stützteil (62) durchqueren und in ein in dem Zwischenträger (16; 16B) vorgesehenes Gewindeloch (60, 70; 74) geschraubt werden soll.

6. Verbindungsvorrichtung nach Anspruch 5, ***dadurch gekennzeichnet,*** daß das Stützteil (62) und die Schenkel (24, 25) komplementäre Flächen (63, 64) aufweisen, die es zwischen den Schenkeln (24, 25) zentrieren sollen.

7. Vorrichtung nach irgend einem der Ansprüche 1 bis 6, ***dadurch gekennzeichnet,*** daß der Zwischenträger (16, 16B) einen Bügel (39) aufweist, in dem das Zerkleinerungswerkzeug (13) angebracht ist.

8. Landmaschine zur Zerkleinerung von Pflanzengut mit einem sich um eine zumindest im wesentlichen horizontale und sich quer zur Fahrtrichtung (6) im Betrieb erstreckende Drehachse (5) drehenden Rotor (4), der einen mittleren Steg (11) und jeweils mittels einer Verbindungsvorrichtung mit dem mittleren Steg (11) verbundene Zerkleinerungswerkzeuge (13) aufweist, ***dadurch gekennzeichnet,*** daß es sich mindestens bei bestimmten der Verbindungsvorrichtungen um Verbindungsvorrichtungen nach irgend einem der Ansprüche 1 bis 7 handelt.

## Claims

1. Device for connecting a shredding tool (13) to the central core (11) of a rotor (4) of an agricultural plant-shredding machine (1) rotating about an at least substantially horizontal axis of rotation (5) transverse to the direction of forward travel (6) during work, the said connecting device comprises a means (15; 15B) allowing the said shredding tool (13) to occupy several working positions so as to describe paths of different radii corresponding to different working levels as the rotor (4) rotates, ***characterized in*** that the said means (15; 15B) comprises:
- an intermediate support (16, 16B) to which the shredding tool (13) is connected and which is itself intended to be connected to the central core (11) of the rotor (4) by means of a first articulation (20), the axis (21) of which is at least substantially parallel to the axis of rotation (5) of the rotor (4);
- a locking means (55) intended to lock the first articulation (20) so as to fix the intermediate support (16; 16B) on the central core (11) of the rotor (4) in at least one angular position (52, 54) that is distant from a radial position (51).

2. Connecting device according to Claim 1, ***characterized in*** that the intermediate support (16; 16B) is connected to the shredding tool (13) by means of a second articulation (22), the axis (23) of which is at least substantially parallel to the axis (21) of the first articulation (20).

3. Connecting device according to Claim 1 or 2, ***characterized in*** that the said angular position(s) (52, 54) extends (extend) behind the radial position (51) when considering the direction (53) in which the rotor (4) rotates.

4. Connecting device according to any one of Claims 1 to 3, ***characterized in*** that the locking means (55) comprises a locking screw (57) intended, on the one hand, to pass through the central core (11) of the rotor (4) or a member (58) which is stationary with respect to the said central core (11) and, on the other hand, to be screwed into at least one threaded hole (60, 70; 74) in the intermediate support (16; 16B), or vice versa.

5. Connecting device according to Claim 4, ***characterized in*** that the intermediate support (16; 16B) is intended to be mounted in a corresponding yoke (26) of the central core (11) of the rotor (4), and in that the said member (58) is formed by a bearing part (62) intended to bear against the two wings (24, 25) of the yoke (26), the locking screw (57) being intended to pass through this bearing part (62) and to be screwed into a threaded hole (60, 70; 74) made in the intermediate support (16; 16B).

6. Connecting device according to Claim 5, ***characterized in*** that the said bearing part (62) and the said wings (24, 25) have complementary surfaces (63, 64) intended to centre the bearing part (62) between the wings (24, 25).

7. Connecting device according to any one of Claims 1 to 6, ***characterized in*** that the intermediate support (16, 16B) has a yoke (39) in which the shredding tool (13) is mounted.

8. Agricultural plant-shredding machine comprising a rotor (4) rotating about an at least substantially horizontal axis of rotation (5) transverse to the direction of forward travel (6) during work, which rotor (4) comprising a central core (11) and shredding tools (13) each connected to the said central core (11) by means of a connecting device, ***characterized in*** that at least some of the said connecting devices are connecting devices according to any one of Claims 1 to 7.
